# EUROPÄISCHE PATENTSCHRIFT

(11) **EP 2 608 880 B1**
(45) Veröffentlichungstag und Bekanntmachung des Hinweises auf die Patenterteilung: **29.11.2017**
(21) Anmeldenummer: 11752160.9
(22) Anmeldetag: 22.08.2011
(51) Int. Cl.: B01J 23/20, B01J 23/62, B01J 23/63, B01J 23/648, B01J 23/652, B01J 37/02, B01J 37/03, C01B 7/04

(54) **VERFAHREN ZUR HERSTELLUNG VON CHLOR DURCH GASPHASENOXIDATION**
METHOD FOR THE PRODUCTION OF CHLORINE BY GAS PHASE OXIDATION
PROCÉDÉ POUR PRODUIRE DU CHLORE PAR UNE OXYDATION CATALYTIQUE EN PHASE GAZEUSE DE CHLORURE D'HYDROGÈNE

(30) Priorität: 25.08.2010 DE 102010039734
(43) Veröffentlichungstag der Anmeldung: 03.07.2013
(73) Patentinhaber: Covestro Deutschland AG, 51373 Leverkusen (DE)
(72) Erfinder: WOLF, Aurel, 42489 Wülfrath (DE); MLECZKO, Leslaw, 41542 Dormagen (DE); SCHLÜTER, Oliver Felix-Karl, 51381 Leverkusen (DE)
(74) Vertreter: Levpat
(86) Internationale Anmeldenummer: PCT/EP2011/064368
(87) Internationale Veröffentlichungsnummer: WO 2012/025482

(56) Entgegenhaltungen:
- EP-A1- 0 609 122
- WO-A1-2008/131857
- WO-A1-2010/055065
- DE-A1-102007 020 096
- DE-A1-102007 020 140
- DE-A1-102007 020 142
- DE-A1-102007 020 154
- US-B1- 6 355 854

## Beschreibung

Die Erfindung geht aus von bekannten Verfahren zur Herstellung von Chlor durch katalytische Gasphasenoxidation von Chlorwasserstoff mit Sauerstoff, worin der Katalysator Zinndioxid als Träger und mindestens eine Halogen und/oder Sauerstoff enthaltende Ruthenium-Verbindung umfasst. Die Erfindung betrifft eine Katalysatorzusammensetzung und deren Verwendung.

Das von Deacon 1868 entwickelte Verfahren der katalytischen Chlorwasserstoffoxidation mit Sauerstoff in einer exothermen Gleichgewichtsreaktion stand am Anfang der technischen Chlorchemie:

4 HCl + O₂ ⇒ 2 Cl₂ + 2 H₂O.

Durch die Chloralkalielektrolyse wurde das Deacon-Verfahren jedoch stark in den Hintergrund gedrängt. Nahezu die gesamte Produktion von Chlor erfolgte durch Elektrolyse wässriger Kochsalzlösungen [Ullmann Encyclopedia of industrial chemistry, seventh release, 2006]. Die Attraktivität des Deacon-Verfahrens nimmt jedoch in jüngster Zeit wieder zu, da der weltweite Chlorbedarf stärker wächst als die Nachfrage nach Natronlauge. Dieser Entwicklung kommt das Verfahren zur Herstellung von Chlor durch Oxidation von Chlorwasserstoff entgegen, das von der Natronlaugenherstellung entkoppelt ist. Darüber hinaus fällt Chlorwasserstoff in großen Mengen beispielsweise bei Phosgenierungsreaktionen, etwa bei der Isocyanat-Herstellung, als Koppelprodukt an.

Die Oxidation von Chlorwasserstoff zu Chlor ist eine Gleichgewichtsreaktion. Die Lage des Gleichgewichts verschiebt sich mit zunehmender Temperatur zu Ungunsten des gewünschten Endproduktes. Es ist daher vorteilhaft, Katalysatoren mit möglichst hoher Aktivität einzusetzen, die die Reaktion bei niedriger Temperatur ablaufen lassen.

Als aktueller Stand der Technik werden für die HCl-Oxidation Ruthenium basierte Katalysatoren eingesetzt. Erste Katalysatoren für die Chlorwasserstoffoxidation mit der katalytisch aktiven Komponente Ruthenium wurden schon 1965 in DE 1 567 788 beschrieben, in diesem Fall ausgehend von RuCl₃ z.B. geträgert auf Siliziumdioxid und Aluminiumoxid. Weitere Ru-basierte Katalysatoren mit der Aktivmasse Rutheniumoxid oder Rutheniummischoxid und als Trägermaterial verschiedene Oxide, wie bspw. Titandioxid, Zirkondioxid, usw. wurden in DE-A 197 48 299, DE-A 197 34 412 und EP 0 936 184 A2 beschrieben.

Weiterhin offenbaren die Schriften WO2008/131857 A1, WO 2007/134772 A1 und WO 2007/134721 A1 Rutheniumbasierte Katalysatorsysteme, die auf Zinndioxid geträgert sind und deren Aktivität sich eindeutig vom vorherigen Stand der Technik abheben.

Ein Nachteil der in WO 2007/134772 A1 und WO 2007/134721 A1 beschriebenen Katalysatorsysteme ist jedoch, dass unter den Reaktionsbedingungen der HCl-Gasphasenoxidation Zinn, vermutlich in Form der flüchtigen Verbindung SnCl₄, aus dem Trägermaterial ausgetragen wird. Dies ist negativ insbesondere für die Lebensdauer der Katalysatoren, da die mechanische Stabilität durch den fortschreitenden Zinnverlust nach und nach reduziert wird. Hinzu kommt, dass das ausgetragene Zinnchlorid vom Produkt abgetrennt werden muss. Demzufolge besteht ein Bedarf nach einem Verfahren, das die chemische Stabilität der aus WO 2007/134772 A1 und WO 2007/134721 A1 bekannten Katalysatoren gegen den Austrag von Zinn erhöht, ohne deren überlegene Aktivität zu beeinträchtigen.

Die Aufgabe der vorliegenden Erfindung besteht also darin, die chemische Stabilität der aus WO 2007/134772 A1 und WO 2007/134721 A1 bekannten Katalysatoren gegen den Austrag von Zinn zu erhöhen, ohne deren überlegene Aktivität zu beeinträchtigen. Gelöst wird die Aufgabe durch die Dotierung des Zinndioxids vor der Aufbringung des katalytisch aktiven Materials.

Überraschenderweise wurde nun gefunden, dass durch Dotierung des Zinndioxids mit ausgewählten Metallen vor der Aufbringung des katalytisch aktiven Materials sowohl die chemische Stabilität des Katalysators unter den Reaktionsbedingungen der HCl-Gasphasenoxidation als auch die Aktivität erhöht werden kann.

Gegenstand der Erfindung ist eine Katalysatorzusammensetzung, die mindestens Zinndioxid als Trägermaterial und mindestens eine Ruthenium enthaltende Verbindung als katalytisch aktives Material umfasst, dadurch gekennzeichnet, dass das Trägermaterial als zusätzlichen Nebenbestandteil Niob oder eine Niobverbindung, besonders bevorzugt Nioboxid enthält.

Der Nebenbestandteil liegt insbesondere in Form einer Dotierung vor. Unter Dotierung wird hier bevorzugt eine homogene Verteilung des Nebenbestandteils in der Gitterstruktur des Wirtsmaterials (z.B. Zinndioxid) verstanden.

Weiterer Gegenstand der Erfindung ist auch ein Verfahren zur Herstellung von Chlor durch katalytische Gasphasenoxidation von Chlorwasserstoff mit Sauerstoff, worin der Katalysator wenigstens mit Nb oder einer Nb-Verbindung, dotiertes Zinndioxid und eine Ruthenium-Verbindung umfasst.

In einer bevorzugten Ausführung wird dotiertes Zinndioxid als Träger der katalytisch aktiven Komponente eingesetzt, wobei Zinndioxid in der Cassiteritstruktur vorliegt.

Das dotierte Zinndioxid umfasst neben Zinn mindestens Nb oder einer Nb-Verbindung. Der Anteil der Dotierung liegt im Bereich von 0,01 bis 30 Gew.-%, bevorzugt 0,05 bis 20 Gew.-% und ganz bevorzugt 0,1 bis 10 Gew.-% bezogen auf das Gesamtgewicht von Zinndioxid und Nebenbestandteil.

Das dotierte Zinndioxid kann, ohne darauf begrenzt zu sein, durch Co-Fällung geeigneter löslicher Zinn- und Dotierungselementsalze, durch hochthermische Behandlung der Salze, durch Physical Vapour Deposition (PVD), Chemical Vapour Deposition (CVD), Sprühpyrolyse geeigneter Lösungen etc. hergestellt werden, wobei die Herstellung bevorzugt durch Co-Fällung durchgeführt werden kann.

Die Co-Fällung kann diskontinuierlich, halbkontinuierlich oder kontinuierlich durchgeführt werden. Die Fällung kann z. B. durch eine Änderung der Temperatur, der Konzentration (auch durch Verdampfen des Lösungsmittels), durch eine Änderung des pH-Wertes und/oder durch die Zugabe eines Fällungsagenzes oder Kombinationen daraus herbeigeführt werden. Bevorzugt kann die Co-Fällung durch Zugabe eines Fällungsreagenzes durchgeführt werden. Übliche Apparate dafür sind Rührkessel, statische Mischer, Ventilmischer, Mikromischer, Düsenvorrichtungen, die eine intensive Vermischung von Salzlösung und Fällungsreagenz gewährleisten.

Es können verschiedene Ausgangsverbindungen eingesetzt werden, sofern Sn-Precursor und das Salz des Dotierungselementes im verwendeten Lösungsmittel löslich sind, d.h. im Falle der Co-Fällung auch gemeinsam gefällt werden können. Beispiele für diese Ausgangsverbindungen sind Acetate, Nitrate, Chloride und weitere lösliche Verbindungen.

Bevorzugte Lösungsmittel sind kurzkettige (C₁- bis C₆-) Alkohole, wie beispielsweise Methanol, Ethanol, n-Propanol, i-Propanol oder Butanol und Wasser sowie Mischungen hieraus. Besonders bevorzugt sind kurzkettige Alkohole.

Beispiele für geeignete Fällungsagenzien sind Lösungen von Ammoniumcarbonat, Ammoniumhydroxid, Ammoniak, Harnstoff, Alkali- bzw. Erdalkalicarbonaten und Alkali- bzw. Erdalkalihydroxiden in den vorstehend genannten Lösungsmitteln.

Die Fällung wird bevorzugt kontinuierlich durchgeführt. Die Metallsalzlösung und gegebenenfalls das Fällungsreagenz und weitere Dotierungskomponenten werden mittels Förderapparaten in einem Mischorgan mit hoher Mischintensität vermischt. Bevorzugt werden statische Mischer, Y-Mischer, Multilaminationsmischer, Ventilmischer, µm-Mischer, (Zweistoff)-Düsenmischer und weitere dem Fachmann bekannte ähnliche Mischer eingesetzt.

Zur Verbesserung des Fällverhaltens und zur Oberflächemodifikation der hergestellten Feststoffe können oberflächenaktive Substanzen (z. B. ionische oder nicht-ionische Tenside oder Carbonsäuren) zugegeben werden.

Vorteilhaft und daher bevorzugt ist eine Co-Fällung der den dotierten Träger bildenden Komponenten, insbesondere aus alkoholischer Lösung, z. B. unter Zugabe von Ammoniaklösung, Ammoniumcarbonat, Ammoniumhydroxid, Harnstoff, Alkalicarbonaten und -hydroxiden als Fällungsreagenz.

Der in Form eines Feststoffs anfallende dotierte Träger kann nach dem Fachmann bekannten Methoden wie z. B. Sedimentation, Filtration, Zentrifugation, Eindampfung und Einengung von den Eduktlösungen getrennt werden. Bevorzugt sind Sedimentation und Eindampfen. Der erhaltene Feststoff kann weiter gewaschen oder direkt, wie erhalten, weiter eingesetzt werden. Für eine verbesserte Handhabbarkeit des erhaltenen Katalysators kann dieser getrocknet werden. Wie bei heterogenen Katalysatoren bekannt, kann eine weitere Konditionierung des dotierten Zinndioxids als Träger von Vorteil sein. Diese Konditionierung kann die Kalzinierung und thermische Behandlung sowie die Behandlung mit reaktiven Atmosphären oder z. B. Wasserdampf mit dem Ziel der Verbesserung der katalytischen Eigenschaften sein. Bevorzugt ist eine thermische Vorbehandlung in oxidierender Atmosphäre, insbesondere Luft, bevorzugt bei 250 bis 1500°C, ganz bevorzugt bei 300 bis 1200°C, besonders bevorzugt von 700 bis 1100 °C. Der Konditionierung vor- oder nachgeschaltet kann eine Formgebung und/oder Klassierung sein.

Erfindungsgemäß wird als katalytisch aktive Komponente mindestens eine Ruthenium enthaltende Verbindung verwendet. Dabei handelt es sich insbesondere um ein Rutheniumhalogenid, Rutheniumhydroxid, Rutheniumoxid, Rutheniumoxihalogenid und/oder Ruthenium in metallischer Form.

Bevorzugt ist eine Katalysatorzusammensetzung, in der die Rutheniumverbindung eine Halogen und/oder Sauerstoff enthaltende Rutheniumverbindung ist.

Bevorzugt wird als katalytisch aktive Komponente eine Halogen-enthaltende Ruthenium-Verbindung verwendet. Dabei handelt es sich z.B. um eine Verbindung, bei der Halogen ionisch bis polarisiert kovalent an ein Rutheniumatom gebunden ist.

Das Halogen in der bevorzugten Halogen-enthaltenden Ruthenium-Verbindung wird bevorzugt aus der Gruppe ausgewählt, die aus Chlor, Brom und Iod besteht. Besonders bevorzugt ist Chlor.

Die Halogen enthaltende Ruthenium-Verbindung schließt solche ein, die ausschließlich aus Halogen und Ruthenium bestehen. Bevorzugt sind jedoch solche, die sowohl Sauerstoff als auch Halogen, insbesondere Chlor bzw. Chlorid enthalten. Besonders bevorzugt ist eine Katalysatorzusammensetzung, in der die katalytisch aktive Rutheniumverbindung ausgewählt ist aus der Reihe: Rutheniumchlorid, Rutheniumoxychlorid und einer Mischung von Rutheniumchlorid und Rutheniumoxid und insbesondere eine Rutheniumoxychlorid-Verbindung umfasst.

Besonders bevorzugt wird als katalytisch aktive Spezies mindestens eine Rutheniumoxychlorid-Verbindung verwendet. Eine Rutheniumoxychlorid-Verbindung im Sinne der Erfindung ist eine Verbindung bei der sowohl Sauerstoff als auch Chlor ionisch bis polarisiert kovalent an Ruthenium gebunden vorliegen. Eine solche Verbindung weist also die allgemeine Zusammensetzung RuOₓCl_{y} auf. Bevorzugt können verschiedene derartige Rutheniumoxychlorid-Verbindungen nebeneinander im Katalysator vorliegen. Beispiele definierter besonders bevorzugter Rutheniumoxychlorid-Verbindungen schließen insbesondere folgende Zusammensetzungen ein: Ru₂Cl₄ RuOCl₂, Ru₂OCl₅ und Ru₂OCl₆.

In einem besonders bevorzugten Verfahren ist die Halogen enthaltende Ruthenium-Verbindung eine Mischverbindung entsprechend der allgemeinen Formel RuClₓO_{y}, worin x eine Zahl von 0,8 bis 1,5 und y eine Zahl von 0,7 bis 1,6 bedeutet.

Die katalytisch aktive Rutheniumoxychlorid-Verbindung im Sinne der Erfindung ist bevorzugt durch ein Verfahren erhältlich, welches zunächst das Aufbringen einer insbesondere wässrigen Lösung oder Suspension von mindestens einer Halogen enthaltenden Rutheniumverbindung auf das dotierte Zinndioxid und das Entfernen des Lösungsmittels umfasst.

Andere denkbare Verfahren schließen die Chlorierung von nichtchlorhaltigen Ruthenium-Verbindungen, wie Rutheniumhydroxiden vor oder nach dem Aufziehen der Ruthenium-Verbindung auf den Träger ein.

Ein bevorzugtes Verfahren schließt das Aufbringen einer wässrigen Lösung von RuCl₃ auf das dotierte Zinndioxid ein.

Nach dem Aufbringen der Ruthenium-Verbindung erfolgt im Allgemeinen ein Trocknungsschritt, der zweckmäßig in Anwesenheit von Sauerstoff bzw. Luft erfolgt, um zumindest teilweise eine Umwandlung in die bevorzugten Rutheniumoxychlorid-Verbindungen zu ermöglichen. Um eine Umwandlung der bevorzugten Rutheniumoxychlorid-Verbindungen in Rutheniumoxide zu vermeiden, sollte die Trocknung bevorzugt bei weniger als 280°C durchgeführt werden, insbesondere bei wenigstens 80°C, besonders bevorzugt wenigstens 100°C. Die Trocknungsdauer beträgt bevorzugt 10 min bis 6 h. Die Katalysatoren können unter Normaldruck oder vorzugsweise bei vermindertem Druck getrocknet werden.

Ein bevorzugtes Verfahren ist dadurch gekennzeichnet, dass der Katalysator dadurch erhältlich ist, dass ein mit einer Halogen enthaltenden Rutheniumverbindung beladener dotierter Zinndioxidträger bei einer Temperatur von mindestens 200°C, bevorzugt mindestens 240°C, besonders bevorzugt mindestens 250°C bis 500°C, insbesondere in einer Sauerstoff enthaltenden Atmosphäre, besonders bevorzugt unter Luft kalziniert wird. Die Kalzinierdauer beträgt bevorzugt 30 min bis 24 h.

In einem besonders bevorzugten Verfahren beträgt der Anteil des Rutheniums aus der katalytisch aktiven Rutheniumverbindung im Verhältnis zur gesamten Katalysatorzusammensetzung, insbesondere nach dem Kalzinieren, 0,5 bis 5 Gew.-%, bevorzugt 1,0 bis 4 Gew.-%, besonders bevorzugt 1,5 bis 3 Gew.-%.

Will man als katalytisch aktive Spezies Halogen-Ruthenium-Verbindungen, die keinen Sauerstoff enthalten, aufziehen, so kann man unter Sauerstoffausschluss auch bei höheren Temperaturen trocknen.

Bevorzugt ist der Katalysator erhältlich durch ein Verfahren, welches das Aufbringen einer wässrigen Lösung oder Suspension von mindestens einer Halogen enthaltenden Rutheniumverbindung auf das dotierte Zinndioxid und das anschließende Trocknen bei weniger als 280°C umfasst, und anschließender Aktivierung unter den Bedingungen der Gasphasenoxidation von Chlorwasserstoff, bei der eine weitgehende Umwandlung in die Rutheniumoxychloride stattfindet. Je länger die Trocknung in Gegenwart von Sauerstoff erfolgt, desto mehr Oxychlorid bildet sich.

In einer besonders bevorzugten Variante wird auf den Träger eine Sauerstoff enthaltende Ruthenium-Verbindung aufgebracht. Dabei handelt es sich um eine Verbindung bei der Sauerstoff ionisch bis polarisiert kovalent an ein Rutheniumatom gebunden ist. Diese Verbindung wird durch das Aufbringen einer wässrigen Lösung oder Suspension von mindestens einer Halogenid enthaltenden Rutheniumverbindung auf das dotierte Zinndioxid und die anschließende Fällung mittels einer alkalischen Verbindung zu Rutheniumhydroxid und gegebenenfalls die Kalzinierung des gefällten Produktes hergestellt.

Die Fällung kann alkalisch unter direkter Bildung der Sauerstoff enthaltenden Ruthenium-Verbindung durchgeführt werden. Sie kann auch reduzierend unter primärer Bildung von metallischem Ruthenium erfolgen, das anschließend unter Sauerstoffzufuhr kalziniert wird, wobei sich die Sauerstoff enthaltende Ruthenium-Verbindung bildet.

Ein bevorzugtes Verfahren schließt das Aufbringen durch Imprägnierung, Tränkung usw. einer wässrigen Lösung von RuCl₃ auf das dotierte Zinndioxid ein.

Nach dem Aufbringen der Halogenid-enthaltenden Ruthenium-Verbindung erfolgt im allgemeinen ein Fällungs- und ein Trocknungs- oder Kalzinierungsschritt, der zweckmäßig in Anwesenheit von Sauerstoff bzw. Luft bei Temperaturen von bis zu 650°C erfolgt.

Besonders bevorzugt kann die katalytisch aktive Komponente, d.h. die Ruthenium enthaltende Verbindung, beispielsweise durch Feucht- und Nass-Imprägnierung eines Trägers mit geeigneten in Lösung vorhandenen Ausgangsverbindungen oder Ausgangsverbindungen in flüssiger oder kolloidaler Form, Auf- und Co-Auffällverfahren, sowie Ionenaustausch und Gasphasenbeschichtung (CVD, PVD) auf den Träger aufgebracht werden.

Die erfindungsgemäßen Katalysatoren für die Chlorwasserstoffoxidation zeichnen sich durch eine hohe Aktivität und eine hohe Stabilität bei niedrigen Temperaturen aus.

Bevorzugt wird, wie oben bereits beschrieben, die neue Katalysatorzusammensetzung in dem als Deacon-Prozess oder HCl-Gasphasenoxidation bekannten katalytischen Verfahren eingesetzt. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 180 bis 500°C, besonders bevorzugt 200 bis 450°C, insbesondere bevorzugt 250 bis 420°C, der übliche Reaktionsdruck beträgt 1 bis 25 bar, bevorzugt 1,2 bis 20 bar, besonders bevorzugt 1,5 bis 17 bar, ganz besonders bevorzugt 2 bis 15 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Geeignete Katalysatoren können ergänzend zu der Rutheniumverbindung auch Verbindungen anderer Metalle oder Edelmetalle, beispielsweise Gold, Palladium, Platin, Osmium, Iridium, Silber, Kupfer, Cer, Chrom oder Rhenium enthalten.

Die katalytische Chlorwasserstoff-Oxidation kann bevorzugt adiabatisch oder isotherm oder annähernd isotherm, diskontinuierlich, bevorzugt aber kontinuierlich als Fließ- oder Festbettverfahren, bevorzugt als Festbettverfahren, besonders bevorzugt adiabat bei einer Reaktortemperatur von 180 bis 500°C, bevorzugt 200 bis 450°C, besonders bevorzugt 250 bis 420°C und einem Druck von 1 bis 25 bar (1000 bis 25000 hPa), bevorzugt 1,2 bis 20 bar, besonders bevorzugt 1,5 bis 17 bar und insbesondere bevorzugt 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff-Oxidation kann bevorzugt auch mehrstufig durchgeführt werden.

Bei der adiabatischen, der isothermen oder annähernd isothermen Verfahrensführung, bevorzugt aber bei der adiabatischen Verfahrensführung, können auch mehrere, insbesondere 2 bis 10, bevorzugt 2 bis 6, in Reihe geschaltete Reaktoren mit Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausführungsform einer für das Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben.

Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder, Kugeln oder Sternstränge als Form. Bevorzugt ist die Kugelform. Die Größe der Katalysatorformkörper, bspw. Durchmesser bei Kugeln oder maximale Querschnittsbreite beträgt im Mittel insbesondere 0,3 bis 7 mm, ganz bevorzugt 0,8 bis 5 mm.

Alternativ zu den zuvor beschriebenen feinteiligen Katalysator(form)körpern kann der Träger auch ein Monolith aus Trägermaterial sein, z.B. nicht nur ein "klassischer" Trägerkörper mit parallelen, radial nicht untereinander verbundenen Kanälen; es zählen auch Schäume, Schwämme o. dgl. mit dreidimensionalen Verbindungen innerhalb des Trägerkörpers zu den Monolithen sowie Trägerkörper mit Kreuzstromkanälen.

Der monolithische Träger kann eine Wabenstruktur, aber auch eine offene oder geschlossene Kreuzkanalstruktur aufweisen. Der monolithische Träger besitzt eine bevorzugte Zelldichte von 100 bis 900 cpsi (cells per square inch), besonders bevorzugt von 200 bis 600 cpsi.

Ein Monolith im Sinne der vorliegenden Erfindung wird z.B. in "Monoliths in multiphase catalytic processes - aspects and prospects" von F. Kapteijn, J. J. Heiszwolf, T. A. Nijhuis und J. A. Moulijn, Cattech 3, 1999, S. 24 offenbart.

Als zusätzliche Trägermaterialen oder Bindemittel für den Träger eignen sich besonders beispielsweise Siliziumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische. Bevorzugtes Bindemittel ist Aluminiumoxid oder Zirkonoxid. Der Anteil an Bindemittel kann bezogen auf den fertigen Katalysator 1 bis 30 Gew.-% betragen, bevorzugt 2 bis 25 Gew.-% und ganz bevorzugt 5 bis 20 Gew.-%. Das Bindemittel erhöht die mechanische Stabilität (Festigkeit) der Katalysatorformkörper.

In einer besonders bevorzugten Variante der Erfindung ist die katalytisch aktive Komponente im Wesentlichen auf der Oberfläche des eigentlichen Trägermaterials, z.B. des dotierten Zinndioxides, nicht jedoch auf der Oberfläche des Bindemittels vorliegend.

Zur zusätzlichen Dotierung der Katalysatoren eignen sich als Promotoren Alkalimetalle oder Metallverbindungen wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Promotoren können, ohne darauf beschränkt zu sein, durch Imprägnier- und CVD-Verfahren auf den Katalysator aufgebracht werden, bevorzugt ist eine Imprägnierung z. B. von Metallverbindungen, insbesondere Nitraten, insbesondere bevorzugt ist ein gemeinsames Aufbringen mit der katalytischen Hauptkomponente.

Der Umsatz an Chlorwasserstoff bei der HCl-Oxidation im einfachen Durchgang kann bevorzugt auf 15 bis 90%, bevorzugt 40 bis 90%, besonders bevorzugt 70 bis 90% begrenzt werden. Nicht umgesetzter Chlorwasserstoff kann nach Abtrennung teilweise oder vollständig in die katalytische Chlorwasserstoff-Oxidation zurückgeführt werden. Das Volumenverhältnis von Sauerstoff zu Chlorwasserstoff am Reaktoreintritt beträgt bevorzugt 1:2 bis 20:1, bevorzugt 2:1 bis 8:1, besonders bevorzugt 2:1 bis 5:1.

Die Reaktionswärme der katalytischen Chlorwasserstoff-Oxidation kann in vorteilhafter Weise zur Erzeugung von Hochdruck-Wasserdampf genutzt werden. Dieser kann zum Betrieb eines Phosgenierungsreaktors und/oder von Destillationskolonnen, insbesondere von Isocyanat-Destillationskolonnen genutzt werden.

In einem weiteren Schritt wird das gebildete Chlor abgetrennt. Der Abtrennschritt umfasst üblicherweise mehrere Stufen, nämlich die Abtrennung und gegebenenfalls Rückführung von nicht umgesetztem Chlorwasserstoff aus dem Produktgasstrom der katalytischen Chlorwasserstoff-Oxidation, die Trocknung des erhaltenen, im wesentlichen Chlor und Sauerstoff enthaltenden Stroms sowie die Abtrennung von Chlor aus dem getrockneten Strom.

Die Abtrennung von nicht umgesetztem Chlorwasserstoff und von gebildetem Wasserdampf kann durch Auskondensieren von wässriger Salzsäure aus dem Produktgasstrom der Chlorwasserstoffoxidation durch Abkühlung erfolgen. Chlorwasserstoff kann auch in verdünnter Salzsäure oder Wasser absorbiert werden.

Gegenstand der Erfindung ist ferner die Verwendung von dotiertem Zinndioxid als Katalysatorträger für einen Katalysator in der katalytischen Gasphasenoxidation von Chlorwasserstoff mit Sauerstoff.

Ein weiterer Gegenstand der Erfindung ist die Verwendung der Katalysatorzusammensetzung als Katalysator, insbesondere für Oxidationsreaktionen, besonders bevorzugt als Katalysator in der katalytischen Gasphasenoxidation von Chlorwasserstoff mit Sauerstoff.

Die folgenden Beispiele veranschaulichen die vorliegende Erfindung:

### Beispiele

### Beispiel 1 (erfindungsgemäß)

### Herstellung von Nb dotiertem SnO₂ durch Co-Fällung

Bei Raumtemperatur wurde eine Lösung mit einer Konzentration von 0,2 mol/L SnCl₄ bzw. 8.1 mmol/L NbCl₅ in i-Propanol und eine Lösung von 0,1 mol/L NH₃ in deionisiertem H₂O mittels Pumpen durch einem Ventilmischer (Fa. Ehrfeld) gefördert, so dass eine intensive kontinuierliche Vermischung sichergestellt wurde. Der entstandene Suspensionsstrang wurde in einem Becherglas unter Rühren aufgefangen, wobei der pH-Wert bei pH = 9,2 gehalten wurde. Der Volumenstrom der Lösung A betrug 250 mL/h. Der Volumenstrom der Lösung B lag zunächst bei 500 mL/h und wurde laufend angepasst, um einen konstanten pH-Wert sicherzustellen. Der so erhaltene Feststoff wurde abzentrifugiert und anschließend mit deionisiertem H₂O NH₃-frei gewaschen. Der Filterkuchen wurde über Nacht bei 120°C an Luft getrocknet und nachfolgend bei 1000°C an Luft für 2 h kalziniert. Der theoretische Nb-Anteil am so hergestellten SnO₂ liegt bei 2,5 Gew.-%. Mittels TEM-EDX (Messung nach Angaben des Herstellers, Fa. Fei, Typ TECNAI 20 mit EDX-Detektor der Fa. EDAX, Typ PV9760/98 GE) konnte eine homogene Verteilung des Nb in der SnO₂-Matrix nachgewiesen werden.

### Beispiel 2 (erfindungsgemäß)

### Trägerung von Rutheniumchlorid auf Nb-dotiertem SnO₂

In einem Rundkolben wurden 1,68 g des unter Beispiel 1 hergestellten dotierten SnO₂ in einer Lösung aus im Handel erhältlichen 0,0865 g Rutheniumchlorid-n-Hydrat in 5 ml Wasser suspendiert und 180 min bei Raumtemperatur gerührt. Die überschüssige Lösung wurde bei 60°C über Nacht eingedampft. Der erhaltene Feststoff wurde anschließend 16 h bei 250°C im Luftstrom kalziniert, wobei ein Rutheniumchloridkatalysator geträgert auf dotiertem SnO₂ erhalten wurde. Die geträgerte Menge an Ruthenium entspricht einem Anteil von 2,01 Gew.-%.

### Beispiel 3 (erfindungsgemäß)

### Trägerung von Rutheniumchlorid auf Nb-dotiertem SnO₂ Formkörper

50 g kugelförmige Nb-SnO₂ Formkörper (Hersteller Saint-Gobain, Nb-SnO₂ entsprechend Beispiel 1) mit einem durchschnittlichen Durchmesser von 1,9 mm und einer BET-Oberfläche von 47,6 m²/g wurden mit einer Lösung aus 2,64 g handelsüblichem Rutheniumchlorid-n-Hydrat und 0,258 g CeCl₃ in 10 g H₂O imprägniert. Nach einer Standzeit von 1 h wurde der Feststoff im Luftstrom bei ca. 60 °C innerhalb von 5 h getrocknet. Anschließend wurde der Katalysator 16 h bei 250 °C kalziniert. Es ergibt sich ein Katalysator mit umgerechnet 2 Gew.-%, an Ruthenium.

### Beispiel 4 (Vergleichsbeispiel)

### Trägerung von Rutheniumchlorid auf kommerziellem SnO₂ Pulver

Entsprechend des Beispiel 2 wurden auf kommerziellen SnO₂ (Fa. MEI, BET 8,1 m²/g) ein Ruhaltiger Katalysator hergestellt. Der Ru-Gehalt entspricht einem Gehalt von 2 Gew-%.

### Beispiel 5 (Vergleichsbeispiel)

### Trägerung von Rutheniumchlorid auf kommerziellem SnO₂ Formkörper

50 g kugelförmige SnO₂ Formkörper (Hersteller Saint-Gobain, kommerzielles SnO₂) mit einem durchschnittlichen Durchmesser von 1,9 mm und einer BET-Oberfläche von 47,6 m²/g wurden mit einer Lösung aus 2,6397 g handelsüblichem Rutheniumchlorid-n-Hydrat und 0,2582 g CeCl₃ in 8,3 g H₂O imprägniert. Nach einer Standzeit von 1 h wurde der Feststoff im Luftstrom bei ca. 60 °C innerhalb von 5 h getrocknet. Anschließend wurde der Katalysator 16 h bei 250 °C kalziniert. Es ergibt sich ein Katalysator mit umgerechnet 2 Gew.-%, an Ruthenium.

### Katalysator-Test Beispiel 6

### Einsatz des Katalysators aus Beispiel 2 in der HCl-Oxidation

0,2 g des pulverförmigen Katalysators gemäß Beispiel 2 wurden in einer Festbettschüttung in einem Quarzreaktionsrohr (Innendurchmesser 10 mm) bei 300°C mit einem Gasgemisch aus 80 ml/min (Standardbedingungen STP) Chlorwasserstoff und 80 ml/min (STP) Sauerstoff durchströmt. Das Quarzreaktionsrohr wurde durch eine elektrisch beheizte Sandwirbelschicht beheizt. Nach 30 min wurde der Produktgasstrom für 15 min in 16 Gew.-%-ige Kaliumiodidlösung geleitet. Das entstandene Iod wurde anschließend mit 0,1 N Thiosulfat-Maßlösung zurücktitriert, um die eingeleitete Chlormenge festzustellen. Es wurde ein Chlorbildungsrate von 2,79 kg_{Cl2}/kg_{KAT}·h gemessen.

### Katalysator-Test Beispiel 7

### Einsatz des Katalysators aus Beispiel 3 in der HCl-Oxidation

25 g des Katalysators gemäß Beispiel 3 wurden in einem mit Ölbad beheiztem Ni-Festbettreaktor (Durchmesser 22 mm, Länge 800 mm) zusammen mit 75 g Inertmaterial (Glaskugeln) eingebaut. Dabei wurde eine Festbettschüttung von ca. 150 mm erhalten. Die Festbettschüttung wurde mittels eines auf 350 °C aufgeheizten Wärmeträgers beheizt. Bei einem Druck von 4 bar wurde der Festbettreaktor mit einem Gasgemisch aus 40,5 L/h (STP) Chlorwasserstoff, 3 15 L/h (STP) Sauerstoff und 94,5 L/h (STP) Stickstoff durchströmt. Nach einer definierten Reaktionszeit (bspw. 30 min) wurde der Produktgasstrom für 5 min in 16%-ige Kaliumiodidlösung geleitet. Das entstandene Iod wurde anschließend mit 0,1 N Thiosulfat-Maßlösung zurücktitriert, um die eingeleitete Chlormenge festzustellen. Der daraus berechnete Umsatz betrug 85 %. Nach 3108 min Laufzeit wurde eine auskondensierte Reaktionsprobe mittels ICP-OES (Inductively Coupled Plasma - Optical Emissions Spectrometry, Gerät: Varian Vista-PRO, Methode nach Herstellerangaben) auf den Gehalt an Sn analysiert. Der analysierte Gehalt an Zinn betrug 3 ppm.

### Katalysator-Test Beispiel 8 (Vergleichsbeispiel)

### Einsatz des Katalysators aus Beispiel 4 in der HCl-Oxidation

0,2 g des Katalysators gemäß Beispiel 4 wurden analog des Katalysatortestbeispiels 6 getestet. Es wurde eine Chlorbildungsrate von 2,34 kg_{Cl2}/kg_{KAT}·h gemessen.

### Katalysator-Test Beispiel 9 (Vergleichsbeispiel)

### Einsatz des Katalysators aus Beispiel 5 in der HCl-Oxidation

25 g des Katalysators gemäß Beispiel 5 wurden analog dem Katalysatortestbeispiel 7 getestet. Die Analyse auf Zinn im Kondensat wurde mittels ICP-OES (Inductively Coupled Plasma - Optical Emissions Spectrometry, Gerät: Varian Vista-PRO, Methode nach Herstellerangaben) durchgeführt. Die Kondensatprobe enthält 35 ppm Sn.

Die Ergebnisse lauten zusammengefasst:

| | **Chlorbildungsrate** kgCl₂/kgKAT·h | **Konzentration Sn im Kondensat** ppm |
|---|---|---|
| **Katalysator 2 (erfindungsgemäß) Katalysator-Test Beispiel 6** | 2,79 | |
| **Katalysator 3 (erfindungsgemäß) Katalysator-Test Beispiel 7** | | 3 |
| **Katalysator 4 Katalysator-Test Beispiel 8** | 2,34 | |
| **Katalysator 5 Katalysator-Test Beispiel 9** | | 35 |

Aus den in der vorstehenden Tabelle aufgeführten Testergebnissen wird deutlich, dass die Stabilität des Trägermaterials erheblich verbessert wird, da der Zinnaustrag aus dem erfindungsgemäßen Katalysatorträger auf ein Zehntel reduziert wird. Außerdem ist eine erhöhte Aktivität des erfindungsgemäßen Katalysatorsystems gegenüber dem bekannten Katalysatorsystem festzustellen.

## Patentansprüche

1. Verfahren zur Herstellung von Chlor durch katalytische Gasphasenoxidation von Chlorwasserstoff mit Sauerstoff an einem Feststoffkatalysator, wobei die Gasphasenoxidation adiabatisch oder isotherm, bevorzugt adiabatisch durchgeführt wird, bei dem der Katalysator wenigstens Zinndioxid als Trägermaterial und mindestens eine Ruthenium enthaltende Verbindung als katalytisch aktives Material umfasst, **dadurch gekennzeichnet, dass** als Katalysator eine Katalysatorzusammensetzung verwendet wird, die mindestens Zinndioxid als Trägermaterial und mindestens eine Ruthenium enthaltende Verbindung als katalytisch aktives Material umfasst, **dadurch gekennzeichnet, dass** das Trägermaterial als zusätzlichen Nebenbestandteil Niob oder eine Niobverbindung, insbesondere bevorzugt Nioboxid, enthält.

2. Verfahren nach Anspruch 1, **dadurch gekennzeichnet, dass** die Rutheniumverbindung eine Halogen und/oder Sauerstoff enthaltende Rutheniumverbindung ist.

3. Verfahren nach Anspruch 2, **dadurch gekennzeichnet, dass** das Halogen der Rutheniumverbindung aus der Reihe: Chlor, Brom und Iod ausgewählt ist und insbesondere Chlor ist.

4. Verfahren nach einem der Ansprüche 1 bis 3, **dadurch gekennzeichnet, dass** die katalytisch aktive Rutheniumverbindung ausgewählt ist aus der Reihe: Rutheniumchlorid, Rutheniumoxychlorid und einer Mischung von Rutheniumchlorid und Rutheniumoxid und insbesondere eine Rutheniumoxychlorid-Verbindung umfasst.

5. Verfahren nach Anspruch 4, **dadurch gekennzeichnet, dass** die katalytisch aktive Rutheniumverbindung eine Mischverbindung entsprechend der allgemeinen Formel RuClₓO_{y} ist, worin x eine Zahl von 0,8 bis 1,5 und y eine Zahl von 0,7 bis 1,6 bedeutet.

6. Verfahren nach einem der Ansprüche 1 bis 5, **dadurch gekennzeichnet, dass** der Anteil des Nebenbestandteils im Bereich von 0,01 bis 30 Gew.-%, bevorzugt 0,05 bis 20 Gew.-% und ganz bevorzugt 0,1 bis 10 Gew.-% bezogen auf das Gesamtgewicht von Zinndioxid und Nebenbestandteil beträgt.

7. Verfahren nach einem der Ansprüche 1 bis 6, **dadurch gekennzeichnet, dass** die Katalysatorzusammensetzung durch ein Verfahren erhältlich ist, welches mindestens die folgenden Schritte umfasst:
A) Herstellen einer insbesondere wässrigen Lösung oder Suspension von mindestens einer Halogen enthaltenden Rutheniumverbindung,
B) Herstellen einer insbesondere wässrigen Lösung von löslichen Zinn- und Salzen von Niob, und Co-Fällung des Zinns und des Niobs für den Nebenbestandteil,
C) thermische Behandlung der gefällten Mischung von Zinn- und weiterem Element in Gegenwart oxidierender Gase zum Erhalt eines dotierten Zinndioxids, und
D) Aufbringen der insbesondere wässrigen Lösung oder Suspension von mindestens einer Halogen enthaltenden Rutheniumverbindung gemäß Schritt A) auf das dotierte Zinndioxid und das Entfernen des Lösungsmittels.

8. Verfahren nach Anspruch 7, **dadurch gekennzeichnet, dass** die bei dem Schritt A) verwendete Halogen enthaltende Rutheniumverbindung RuCl₃ ist.

9. Verfahren nach Anspruch 7 oder 8, **dadurch gekennzeichnet, dass** der Katalysator durch ein Verfahren erhältlich ist, bei dem das Entfernen des Lösungsmittels eine Trocknung bei wenigstens 80°C, bevorzugt wenigstens 100°C umfasst.

10. Verfahren nach einem der Ansprüche 1 bis 9, **dadurch gekennzeichnet, dass** die Katalysatorzusammensetzung dadurch erhältlich ist, dass ein mit einer Halogen enthaltenden Rutheniumverbindung beladener Zinndioxidträger bei einer Temperatur von mindestens 200°C, bevorzugt mindestens 240°C, besonders bevorzugt 250°C bis 500°C, insbesondere in einer Sauerstoff enthaltenden Atmosphäre, besonders bevorzugt unter Luft kalziniert wird.

11. Verfahren nach einem der Ansprüche 1 bis 10, **dadurch gekennzeichnet, dass** der Anteil des Rutheniums aus der Halogen enthaltenden Rutheniumverbindung im Verhältnis zur gesamten Katalysatorzusammensetzung, insbesondere nach dem Kalzinieren, 0,5 bis 5 Gew.-%, bevorzugt 1,0 bis 4 Gew.-%, besonders bevorzugt 1,5 bis 3 Gew.-% beträgt.

12. Verfahren nach einem der Ansprüche 1 bis 11, **dadurch gekennzeichnet, dass** das Zinndioxid wenigstens teilweise, bevorzugt vollständig in Kassiterit-Form vorliegt.

13. Verfahren nach einem der Ansprüche 1 bis 12, **dadurch gekennzeichnet, dass** die Gasphasenoxidation des Chlorwasserstoffs das Überleiten eines Chlorwasserstoff und Sauerstoff enthaltenden Gases bei einer Temperatur von 180 bis 500°C, bevorzugt 200 bis 450°C, besonders bevorzugt 250 bis 420°C umfasst und das entstehende Chlor vom Reaktionswasser und gegebenenfalls nicht umgesetztem Sauerstoff und Chlorwasserstoff getrennt wird.

14. Verfahren nach einem der Ansprüche 1 bis 13, **dadurch gekennzeichnet, dass** die Gasphasenoxidation bei einem Druck von 1 bis 25 bar, bevorzugt 1,2 bis 20 bar, besonders bevorzugt 1,5 bis 17 bar und insbesondere bevorzugt 2,0 bis 15 bar durchgeführt wird.

15. Verwendung von mit Niob oder einer Niobverbindung als Nebenbestandteil dotiertem Zinndioxid als Katalysatorträger für einen Katalysator in der katalytischen Gasphasenoxidation von Chlorwasserstoff mit Sauerstoff.

## Claims

1. Process for preparing chlorine by catalytic gas phase oxidation of hydrogen chloride with oxygen over a solid catalyst, the gas phase oxidation being conducted adiabatically or isothermally, especially adiabatically, in which the catalyst comprises at least tin dioxide as a support material and at least one ruthenium-containing compound as a catalytically active material, **characterized in that** the catalyst used is a catalyst composition comprising at least tin dioxide as a support material and at least one ruthenium-containing compound as a catalytically active material, **characterized in that** the support material comprises, as an additional secondary constituent, niobium or a niobium compound, especially preferably niobium oxide.

2. Process according to Claim 1, **characterized in that** the ruthenium compound is a halogen- and/or oxygen-containing ruthenium compound.

3. Process according to Claim 2, **characterized in that** the halogen in the ruthenium compound is selected from the group of: chlorine, bromine and iodine and is especially chlorine.

4. Process according to any of Claims 1 to 3, **characterized in that** the catalytically active ruthenium compound is selected from the group of: ruthenium chloride, ruthenium oxychloride and a mixture of ruthenium chloride and ruthenium oxide and especially a ruthenium oxychloride compound.

5. Process according to Claim 4, **characterized in that** the catalytically active ruthenium compound is a mixed compound corresponding to the general formula RuClₓO_{y} in which x is a number from 0.8 to 1.5 and y is a number from 0.7 to 1.6.

6. Process according to any of Claims 1 to 5, **characterized in that** the proportion of the secondary constituent is in the range from 0.01 to 30% by weight, preferably 0.05 to 20% by weight and very preferably 0.1 to 10% by weight, based on the total weight of tin dioxide and secondary constituent.

7. Process according to any of Claims 1 to 6, **characterized in that** the catalyst composition is obtainable by a process comprising at least the following steps:
A) preparing a solution or suspension, especially an aqueous solution or suspension, of at least one halogen-containing ruthenium compound,
B) preparing a solution, especially an aqueous solution, of soluble tin salts and salts of niobium, and coprecipitating the tin and the niobium for the secondary constituent,
C) thermally treating the precipitated mixture of tin and further element in the presence of oxidizing gases to obtain a doped tin dioxide, and
D) applying the solution or suspension, especially aqueous solution or suspension, of at least one halogen-containing ruthenium compound according to step A) to the doped tin dioxide and removing the solvent.

8. Process according to Claim 7, **characterized in that** the halogen-containing ruthenium compound used in step A) is RuCl₃.

9. Process according to Claim 7 or 8, **characterized in that** the catalyst is obtainable by a process in which the removal of the solvent comprises drying at at least 80°C, preferably at least 100°C.

10. Process according to any of Claims 1 to 9, **characterized in that** the catalyst composition is obtainable by calcining a tin dioxide support laden with a halogen-containing ruthenium compound at a temperature of at least 200°C, preferably at least 240°C, more preferably 250°C to 500°C, especially in an oxygen-containing atmosphere, more preferably under air.

11. Process according to any of Claims 1 to 10, **characterized in that** the proportion of ruthenium from the halogen-containing ruthenium compound in relation to the overall catalyst composition, especially after calcination, is 0.5 to 5% by weight, preferably 1.0 to 4% by weight, more preferably 1.5 to 3% by weight.

12. Process according to any of Claims 1 to 11, **characterized in that** the tin dioxide is at least partially, preferably completely, in cassiterite form.

13. Process according to Claims 1 to 12, **characterized in that** the gas phase oxidation of the hydrogen chloride comprises the passage of a gas comprising hydrogen chloride and oxygen at a temperature of 180 to 500°C, preferably 200 to 450°C, more preferably 250 to 420°C, and the chlorine formed is separated from the water of reaction and any unconverted oxygen and hydrogen chloride.

14. Process according to any of Claims 1 to 13, **characterized in that** the gas phase oxidation is conducted at a pressure of 1 to 25 bar, preferably 1.2 to 20 bar, more preferably 1.5 to 17 bar and especially preferably 2.0 to 15 bar.

15. Use of tin dioxide doped with niobium or a niobium compound as secondary constituent as a catalyst support for a catalyst in the catalytic gas phase oxidation of hydrogen chloride with oxygen.

## Revendications

1. Procédé de fabrication de chlore par oxydation catalytique en phase gazeuse de chlorure d'hydrogène avec de l'oxygène sur un catalyseur solide, l'oxydation en phase gazeuse étant réalisée sous forme adiabatique ou isotherme, de préférence sous forme adiabatique, selon lequel le catalyseur comprend au moins du dioxyde d'étain en tant que matériau support et au moins un composé contenant du ruthénium en tant que matériau catalytiquement actif, **caractérisé en ce qu'**une composition de catalyseur est utilisée en tant que catalyseur, qui comprend au moins du dioxyde d'étain en tant que matériau support et au moins un composé contenant du ruthénium en tant que matériau catalytiquement actif, **caractérisé en ce que** le matériau support contient en tant que constituant secondaire supplémentaire du niobium ou un composé de niobium, de manière particulièrement préférée de l'oxyde de niobium.

2. Procédé selon la revendication 1, **caractérisé en ce que** le composé de ruthénium est un composé de ruthénium contenant un halogène et/ou de l'oxygène.

3. Procédé selon la revendication 2, **caractérisé en ce que** l'halogène du composé de ruthénium est choisi dans la série : chlore, brome et iode, et est notamment le chlore.

4. Procédé selon l'une quelconque des revendications 1 à 3, **caractérisé en ce que** le composé de ruthénium catalytiquement actif est choisi dans la série : chlorure de ruthénium, oxychlorure de ruthénium et un mélange de chlorure de ruthénium et d'oxyde de ruthénium, et comprend notamment un composé d'oxychlorure de ruthénium.

5. Procédé selon la revendication 4, **caractérisé en ce que** le composé de ruthénium catalytiquement actif est un composé mixte correspondant à la formule générale RuClₓO_{y}, dans laquelle x signifie un nombre de 0,8 à 1,5 et y un nombre de 0,7 à 1,6.

6. Procédé selon l'une quelconque des revendications 1 à 5, **caractérisé en ce que** la proportion du constituant secondaire est dans la plage allant de 0,01 à 30 % en poids, de préférence de 0,05 à 20 % en poids et de manière tout particulièrement préférée de 0,1 à 10 % en poids, par rapport au poids total de dioxyde d'étain et de constituant secondaire.

7. Procédé selon l'une quelconque des revendications 1 à 6, **caractérisé en ce que** la composition de catalyseur peut être obtenue par un procédé qui comprend au moins les étapes suivantes :
A) la fabrication d'une solution ou suspension notamment aqueuse d'au moins un composé de ruthénium contenant un halogène,
B) la fabrication d'une solution notamment aqueuse d'étain soluble et de sels de niobium, et la co-précipitation de l'étain et du niobium pour le constituant secondaire,
C) le traitement thermique du mélange précipité d'étain et de l'élément supplémentaire en présence de gaz oxydants pour obtenir un dioxyde d'étain dopé, et
D) l'application de la solution ou suspension notamment aqueuse d'au moins un composé de ruthénium contenant un halogène selon l'étape A) sur le dioxyde d'étain dopé et l'élimination du solvant.

8. Procédé selon la revendication 7, **caractérisé en ce que** le composé de ruthénium contenant un halogène utilisé à l'étape A) est RuCl₃.

9. Procédé selon la revendication 7 ou 8, **caractérisé en ce que** le catalyseur peut être obtenu par un procédé selon lequel l'élimination du solvant comprend un séchage à au moins 80 °C, de préférence à au moins 100 °C.

10. Procédé selon l'une quelconque des revendications 1 à 9, **caractérisé en ce que** la composition de catalyseur peut être obtenue par calcination d'un support de dioxyde d'étain chargé avec un composé de ruthénium contenant un halogène à une température d'au moins 200 °C, de préférence d'au moins 240 °C, de manière particulièrement préférée de 250 °C à 500 °C, notamment dans une atmosphère contenant de l'oxygène, de manière particulièrement préférée dans de l'air.

11. Procédé selon l'une quelconque des revendications 1 à 10, **caractérisé en ce que** la proportion de ruthénium du composé de ruthénium contenant un halogène par rapport à l'ensemble de la composition de catalyseur, notamment après la calcination, est de 0,5 à 5 % en poids, de préférence de 1,0 à 4 % en poids, de manière particulièrement préférée de 1,5 à 3 % en poids.

12. Procédé selon l'une quelconque des revendications 1 à 11, **caractérisé en ce que** le dioxyde d'étain se présente au moins en partie, de préférence en totalité, sous la forme de cassitérite.

13. Procédé selon l'une quelconque des revendications 1 à 12, **caractérisé en ce que** l'oxydation en phase gazeuse du chlorure d'hydrogène comprend l'acheminement d'un gaz contenant du chlorure d'hydrogène et de l'oxygène à une température de 180 à 500 °C, de préférence de 200 à 450 °C, de manière particulièrement préférée de 250 à 420 °C, et le chlore formé est séparé de l'eau de réaction et éventuellement de l'oxygène et du chlorure d'hydrogène non réagis.

14. Procédé selon l'une quelconque des revendications 1 à 13, **caractérisé en ce que** l'oxydation en phase gazeuse est réalisée à une pression de 1 à 25 bar, de préférence de 1,2 à 20 bar, de manière particulièrement préférée de 1,5 à 17 bar et de manière notamment préférée de 2,0 à 15 bar.

15. Utilisation de dioxyde d'étain dopé avec du niobium ou un composé de niobium en tant que constituant secondaire en tant que support de catalyseur pour un catalyseur dans l'oxydation catalytique en phase gazeuse de chlorure d'hydrogène avec de l'oxygène.
